# EUROPÄISCHE PATENTANMELDUNG

(11) **EP 1 952 978 A1**
(43) Veröffentlichungstag der Anmeldung: **06.08.2008**
(21) Anmeldenummer: 08006694.7
(22) Anmeldetag: 15.05.2004
(51) Int. Cl.: B32B 17/10, C03C 17/22, C03C 27/12, E04D 3/06, E04F 10/00, E06B 3/58, G09F 13/20, F21V 21/00, A47F 3/00, B44C 5/00, B44F 1/06

(54) **Verfahren und Vorrichtung zur Herstellung von Verbundelementen und Verbundelement**

(30) Priorität: 28.05.2003 DE 10325402; 06.10.2003 DE 10347163
(62) Teilanmeldung aus: 04733260.6
(71) Anmelder: Döppner Bauelemente GmbH & Co. KG, 36137 Grossenlüder (DE); Schneider + Fichtel GmbH, 72108 Rottenburg a.N. (DE); Schott AG, 55122 Mainz (DE)
(72) Erfinder: Döppner, Christoph, 36124 Eichenzell/Lütter (DE); Schneider, Rolf A. O., 72108 Rottenburg (DE)
(74) Vertreter: Patentanwälte Ruff, Wilhelm, Beier, Dauster & Partner

(57) **Zusammenfassung**

Zur Herstellung von Verbundelementen mit zwei Glasscheiben (20, 21) mit wenigstens einer dazwischen befindlichen, nicht vollflächig in bezug auf die Außenelemente ausgebildeten, z. B. gelochten Einlage (22) und wenigstens einer transparenten, thermoplastischen Folienschicht (23) wird das so vorbereitete Verbundelement in einen evakuierbaren Raum eingebracht und unter Pressdruck gesetzt. Durch Erwärmung auf eine Erweichungstemperatur der Folienschicht wird die Einlage unter Pressung mit beiden Glasscheiben verbunden, wobei die Löcher, Ausriehmnungen etc. in der Einlage entgast und mit dem Folienmaterial gefüllt werden. Es entsteht ein blasenfreies, ggf. verstärktes, optisch interessantes und auch mit Zusatzfunktionene ausgestattetes Verbundglaselement.

## Beschreibung

### Anwendungsgebiet und Stand der Technik

Die Erfindung betrifft ein Verfahren und eine Vorrichtung zur Herstellung von Verbundelementen, die zwei plattenartige Außenelemente aufweisen, von denen wenigstens eines eine Glasscheibe ist, sowie ein Verbundelement. Im wesentlichen zwischen den Außenelementen befindet sich wenigstens eine, nicht vollflächig in bezug auf die Außenelemente ausgebildete Einlage und wenigstens eine lichtdurchlässige, thermisch beeinflussbare Schicht zur Verbindung der Außenelemente mit der Einlage.

In der DE 200 06 153 U1 ist eine plattenartige Vorrichtung beschrieben, die zur Verkleidung von Balkonen eingesetzt wird. Die Vorrichtung besteht aus zwei Glasscheiben, zwischen denen ein Lochblech angeordnet ist. Die Glasscheiben und das Lochblech werden mit Gießharz zu einem Verbund verklebt. Das Herstellen von Verbundgläsern mit Gießharz-Klebemittel ist seit langem bekannt. Es tritt jedoch das Problem auf, dass sich die zwischen die Scheiben eingefüllte Gießharzschicht nicht gleichmäßig verteilt oder dass Luftblasen entstehen, die nicht wieder entfernt werden können. Ein weiteres Problem ist, dass sich beschichtete Scheiben im Gießharzverbund auch verfärben können. Solche Verbundgläser lassen sich dann nicht mehr als hochwertige Design-Elemente einsetzen.

Die US 3 311 517 betrifft eine Flugzeugscheibe, die Glasscheiben mit einer Zwischenschicht aus Polyvinylbutyral aufweist. Die Zwischenschicht soll mit einem Metalleinsatz versteift sein. Dieses Verbundelement soll eine auf eine der beiden Scheiben aufgebrachte Zinnoxidbeschichtung aufweisen. Der Einschluss der Einheit in einen Beutel und die Evakuierung dieses Beutels soll vor dem Aufbringen irgend einer erhöhten Temperatur erfolgen. Die Scheibe wird in einen Beutel einbezogen, dieser wird vakuumverschweißt und damit fest verschlossen und danach wird eine thermische Behandlung in einem Autoklaven vorgenommen.

Bei der GB 1 097 719 wird kein Autoklave verwendet. Zwischen zwei Glasscheiben eingelegte Antennendrähte sind im Bereich einer Einfärbung vorgesehen, jedoch im Abstand davon.

Die US 4 100398 zeigt ein elektrisch beheizbares Fenster mit Zuleitungen, die zwischen zwei Schichten eingeschlossen sind und beschreibt auch einen Laminierungsprozess mit Evakuierung und einem Autoklaven. Die Zuleitungen sind außerordentlich dünne Metallstreifen oder Folien, die darüber hinaus noch am Randbereich angeordnet sind, so dass sich bei ihrem Einschluss keine Probleme stellen.

Die EP 1 129 844 A beschreibt Scheiben, die mittels Klebstoff oder anderen klebenden Schichten zusammengefügt sind und farbig dekorierte Kanäle ergeben sollen. Probleme durch Einschluss von Einlagen stellen sich dort nicht.

Die EP 0 525 690 A zeigt ein Verbundelement mit Einlagen, die in die Verbindungsschicht zwischen zwei Einzelplatten eingelegt sind. Die organische Verbindungsschicht soll zur Verbindung der Einzelglasscheiben unter Erhitzung und gegebenenfalls Druck dienen. Das Problem der Gasblasenbildung und deren Entfernung ist nicht angesprochen.

Schließlich beschreibt die US 4 180 426 A einen Herstellungsprozess im Autoklaven unter Evakuierung in einem flexiblen Sack. Es sind keine Einlagen vorgesehen.

Die WO 2004/009349 A1 beschreibt Verbundelemente mit zwei Glasscheiben, die eine thermoplastische Zwischenschicht und eine Einlage in der Zwischenschicht aufweisen. Die Glasscheiben werden dabei zusammenlaminiert und bilden einen Verbund.

### Aufgabe und Lösung

Aufgabe der Erfindung ist es, ein Verfahren und eine Vorrichtung zur Herstellung der eingangs erwähnten Art von Verbundelementen zu schaffen, mit denen sich Verbundelemente schnell, kostengünstig und in hoher Qualität herstellen lassen. Insbesondere sollen die erfindungsgemäß hergestellten Verbundelemente als insbesondere hochwertige Design-Elemente eingesetzt werden können.

Gelöst wird diese Aufgabe durch ein Verfahren gemäß Anspruch 1, ein Verbundelement gemäß Anspruch 10 und eine Vorrichtung gemäß Anspruch 13.

Das erfindungsgemäße Verfahren zeichnet sich dadurch aus, dass zunächst Einlage und thermisch beeinflussbare Schicht, insbesondere eine oder mehrere thermoplastische Folien, auf ein erstes Außenelement, insbesondere auf dessen Fläche, die im zusammengefügten Verbundelement die Innenfläche darstellt, aufgebracht werden. Es kann zunächst die Schicht und dann die Einlage oder zunächst die Einlage und dann die Schicht aufgebracht werden. Es ist auch möglich, zunächst die Schicht, dann die Einlage und dann eine weitere Schicht aufzubringen. Es ist auch möglich, abwechselnd mehrere Einlagenschichten und mehrere Schichten aufzubringen. Die Einlage ist eine Stromzuführung für einen elektrischen Verbraucher, der an dem Verbundelement oder zwischen den Außenelementen angeordnet ist.

Nach dem Aufbringen von Einlage und Schicht auf das erste Außenelement wird dieses mit dem zweiten Außenelement zu einem Verbundelement zusammengefügt, wobei das zweite Außenelement mit der Schicht beschichtet oder unbeschichtet sein kann. Das dadurch entstandene Verbundelement wird in einen evakuierbaren Raum eingebracht, der insbesondere als flexibler, wärmebeständiger Sack ausgebildet ist. Der evakuierbare Raum kann auch nach Art eines Akkordeon-Balgs, d.h. mit zwei einander gegenüberliegenden gegebenenfalls starren Pressplatten, in deren Bereich auch die abzudichtende Öffnung liegt, ausgebildet sein, die durch den Balg verbunden sind. Auch eine gesonderte z. B. mechanische oder hydraulische Erzeugung des Pressdrucks und des Volumens ist möglich.

Es wird ein relativer Unterdruck an den Raum angelegt, wobei wenigstens ein Teil des Raumes unter einem durch den relativen Unterdruck bedingten Pressdruck auf das Verbundelement gepresst wird und dieses zusammenpresst. Ferner wird eine Behandlungstemperatur derart eingestellt, dass in Kombination mit dem Pressdruck die vorzugsweise thermoplastische Schicht plastifiziert wird und somit die Einlage insbesondere vollständig unter Vermeidung der Bildung von Gaseinschlüssen umschließt.

Es lassen sich also Verbundelemente herstellen, die durch eine gleichmäßig ausgebildete, lichtdurchlässige, vorzugsweise transparente Schicht verbunden sind. Insbesondere bei den hier betrachteten Verbundelementen mit einer Einlage kommt es bei herkömmlichen Herstellungsverfahren oft vor, dass die Einlage vom Gießharz unvollständig oder nicht mit gleicher Schichtdicke umflossen wird, Luftblasen eingeschlossen werden etc.. Solche Verbundelemente lassen sich dann nicht als hochwertige Design-Elemente einsetzen oder entsprechen nicht den einschlägigen Sicherheitsvorschriften, die an Verbundelemente gestellt werden, die eine sichernde Funktion übernehmen sollen, beispielsweise Verbundelemente, die für absturzsichernde Verglasung eingesetzt werden. Hingegen tritt beim erfindungsgemäßen Verfahren dieses Problem nicht auf. Es ist erstaunlich, dass dabei auch durch die Form der Einlagen bedingte, größere Lufteinschlüsse vollständig, auch aus der Mitte größerer Flächen, herausgesaugt werden. Durch den im Raum vorherrschenden Unterdruck können die Gaseinschlüsse regelrecht aus dem Verbundelement herausgezogen werden, wobei auch im Zentrum des Verbundelementes befindliche Gaseinschlüsse sicher beseitigt werden können. Anstelle der Gaseinschlüsse kann dann die Schicht nachlaufen, so dass die Stellen an denen sich zuvor die Gaseinschlüsse befanden, vollständig mit dem Material der Schicht gefüllt werden.

Das Entfernen von Gaseinschlüssen kann dadurch unterstützt werden, dass eine in Richtung wenigstens eines Randes des Verbundelementes insbesondere auf dessen Außenflächen wirkende Streich- oder Walzbewegung durchgeführt und/oder ein Randbereich des Verbundelementes entlastet wird. Dazu kann eine Streich- oder Walzeinrichtung vorgesehen sein, die entweder im evakuierbaren Raum angeordnet ist, im Falle eines als flexibler Sack ausgebildeten Raumes auf diesen einwirkt oder bei den vorher erwähnten Pressplatten durch Formgebung und/oder Flexibilität erzeugt wird.

Zusätzlich zum Pressdruck, der durch den Unterdruck im evakuierbaren Raum erzeugt wird, kann ein vom Unterdruck im Raum unabhängiger Zusatz-Pressdruck eingeleitet werden. Dies kann beispielsweise dadurch erfolgen, dass ein als flexibler Sack ausgebildeter Raum sich seinerseits in einer Überdruckkammer, beispielsweise in einem Autoklaven, befindet. Der sich so ergebende Gesamt-Pressdruck kann im Bereich von 5 bar bis 25 bar, insbesondere im Bereich von 12 bar bis 18 bar liegen.

Die Behandlungstemperatur sollte derart eingestellt werden, dass die lichtdurchlässige, insbesondere transparente, thermisch beeinflussbare Schicht anfängt zu fließen und die Einlage bzw. Einlagen umfließt. Die Behandlungstemperatur kann im Bereich von 50°C bis 200°C, insbesondere im Bereich von 100°C bis 150°C gewählt werden. Abhängig von den thermischen Eigenschaften der Schicht können auch andere Behandlungstemperaturen eingestellt werden.

Bevorzugt wird als wenigstens eine Einlage eine solche verwendet, die nicht vollflächig in bezug auf die Außenelemente ausgebildet ist, so dass es im Verbundelement Bereiche gibt, die mit der Einlage belegt sind und Bereiche gibt, die einlagenfrei sind. Einlagenfreie Bereiche können mit dem Material der Folie vollständig gefüllt werden. Dabei sollte die Folienstärke und -Anzahl so gewählt werden, dass nach Füllung der Ausnehmungen in der Einlage noch Material übrig bleibt, um eine vollflächige Verklebung zwischen Einlage und beiden Außenelementen zu gewährleisten. Vorteilhaft wird dazu eine Folie zwischen Einlage und jeden Außenelement eingelegt.

Die Einlage kann in einen Randbereich eingeschlossen werden und über das Verbundelement herausragen. Dies bietet den Vorteil, die Einlage als Befestigungselement für die Verbundscheiben o. dgl. zu verwenden.

Bei der Einlage kann es sich um verbundverstärkendes, insbesondere festigkeitsverstärkendes Material handeln, das eine höhere Festigkeit oder Zähigkeit als eine Glasscheibe aufweist, womit das Verbundelement auch als absturzsichernde Verglasung, beispielsweise bei Brüstungen, Balkonverglasungen o. dgl., bei Überkopfverglasungen, wie Vordächern o. dgl., Glasfassaden, Türen, Schildern, Trennwänden, Treppenstufen usw. eingesetzt werden kann. Beispielsweise ist es bei Überkopfverglasungen nicht gestattet, Gläser, die Spannungen unterliegen, in der Zugzone zu bohren, ohne dort das Glas zu befestigen. Eine Bohrung, um beispielsweise einen optischen Effekt mit einzubringen, ist nicht möglich. Mit einer Verstärkung durch das Vakuumverfahren wird die Schwächung des betroffenen Glases aufgehoben. Mit Stromzufuhr kann dort sogar ein von außen zugänglicher elektrischer Verbraucher angebracht werden.

Bei dem verbundverstärkenden Material kann es sich um lichtdurchlässigen Kunststoff, vorzugsweise Acryl, Polycarbonat o. dgl., Metall, vorzugsweise in Blechform, beispielsweise als Lochblech, Metall- oder Kunststoffmaschenware, wie Gewebe, Gewirk, Gestrick, Gitter, Kohlefaser, Holz oder Kombinationen aus den vorgenannten Materialien handeln.

Besonders bevorzugt handelt es sich bei einer weiteren Einlage um wenigstens einen elektrischen Verbraucher, vorzugsweise um ein Leuchtmittel, beispielsweise um eine Diode, insbesondere um eine LED-Diode. Alternativ können auch andere elektrische Verbraucher als Einlage verwendet werden, beispielsweise eine Überwachungseinrichtung, beispielsweise in Form einer Kamera, eine Beschallungseinrichtung, beispielsweise in Form eines Lautsprechers oder Signalgeber für Klingelknopf und/oder ein Bewegungsmelder.

Es können mehrere Leuchtmittel eingesetzt werden, die in einem insbesondere regelmäßigen Raster angeordnet sind. Alternativ kann ein Feld mit eng zusammenliegenden Leuchtmitteln gebildet werden, die ab einem bestimmten Abstand zum Verbundelement als eine einzige Lichtquelle erscheinen. Mit den Leuchtmitteln lassen sich auch Buchstaben, Zahlen oder andere Symbole darstellen. Beispielsweise lässt sich durch entsprechende Anordnung von Leuchtmitteln eine Laufschriftanzeige bilden. Es ist auch möglich, verschiedenfarbige Leuchtmittel in das Verbundelement zu integrieren, beispielsweise in den Signalfarben rot oder grün, so dass Symbole in diesen Signalfarben gebildet werden können. Beispielsweise könnten bei einer Glastür rote und grüne Signaldioden beispielsweise im Bereich oberhalb des Türschlosses integriert sein, die anzeigen, ob die Tür auf- oder abgeschlossen ist. Auch könnten die Signaldioden mit einem Identifizierungsgerät, beispielsweise einem Kartenleser, gekoppelt sein, so dass bei Freigabe die grüne Diode aufleuchtet. Die elektrischen Anschlüsse für die Leuchtmittel können ebenfalls in das Verbundelement integriert werden. Beispielsweise kann es sich dabei um einen relativ dünnen Draht handeln, an dem die Leuchtmittel nacheinander, in Reihe geschaltet, aufgereiht sind. Durch dementsprechende Drahtführung, beispielsweise Drahtbiegungen können auch andere Schaltungen, beispielsweise Kombinationsschaltungen, Parallelschaltungen o. dgl. gebildet werden. Alternativ ist es möglich, anstelle des Drahtes eine elektrisch leitende Schicht zu verwenden, die sich beispielsweise in Form von dünnen Folienstreifen an der Innenfläche eines der Außenelemente befindet. Es ist auch möglich, beide Innenflächen von Glasscheiben großflächig mit einer elektrisch leitenden gegebenenfalls transparenten Schicht zu versehen, so dass die eine Innenfläche den Pluspol und die andere Innenfläche den Minuspol bildet. Es ist möglich eine elektrisch leitende Beschichtung auf wenigstens ein Außenelement aufzubringen, beispielsweise aufzudampfen, aufzusprühen o. dgl. oder einzubrennen.

Die Leuchtmittel können mit einem Lichtsensor gekoppelt sein, der diese in Abhängigkeit von einer zuvor eingestellten Helligkeit ein- oder ausschaltet. Es ist auch möglich mehrere Leuchtmittel wechselweise anzusteuern, beispielsweise mehrere, in voneinander unabhängigen Schaltkreisen angeordnete Leuchtmittel ein- oder auszudimmen, um einen optischen Effekt nach Art eines funkelnden Sternenhimmels zu erzeugen.

Es ist möglich, als weitere Einlage wenigstens ein Heizmittel, beispielsweise einen Heizdraht, zu verwenden. Dadurch kann beispielsweise bei einem als Überkopfverglasung eingesetzten Verbundelement eine Erwärmung veranlasst werden, um auf dem Verbundelement befindliche Eis- oder Schneeablagen zu beseitigen, beispielsweise derart, dass der Schnee bei einem schrägen Vordach einfach herunterrutscht. Auch eine Kombination von Leuchtmittel und Heizmittel ist möglich, beispielsweise derart, dass die Stromführung der Leuchtmittel zugleich als Heizmittel dient.

Es ist auch möglich, als weitere Einlage eine Kombination von Leuchtmittel und verbundverstärkendem und/oder dekorativem Material vorzusehen, beispielsweise eine Kombination von lichtdurchlässigem Kunststoff und wenigstens einer Diode. Das Leuchtmittel könnte am Rand eines lichtdurchlässigen Kunststoffelementes angeordnet sein, womit sich aufgrund der lichtleitenden Eigenschaften des Kunststoffs das gesamte Kunststoffelement ausleuchten lässt. Somit können beleuchtete Kunststoffschilder in das Verbundelement integriert werden.

Bei der Schicht handelt es sich meist um eine thermoplastische Folie. Die Folie kann farbig oder farblos sein. Bevorzugt wird eine reißfeste Folie verwendet, beispielsweise eine zur Herstellung von Verbundsicherheitsglas (VSG-Glas) verwendbare Polyvinylbutyral-Folie (PVB-Folie). Die Folie kann stromleitend sein, so dass sie zugleich auch als Stromzuführung für im Verbundelement befindliche elektrische Verbraucher dienen kann.

Bei den Außenelementen handelt es sich bevorzugt um zwei Glasscheiben beispielsweise Float-Glas, vorgespannte Gläser, wie Einscheibensicherheitsglas (ESG-Glas), teilvorgespanntes Glas (TVG-Glas), optische Gläser, wie Ornamentglas, Spiegelglas und/oder lichtdurchlässiger Kunststoff, wie Acrylglas, Polycarbonatglas oder dergleichen. Es ist also auch beispielsweise ein Verbundelement in Form zweier Acrylglasscheiben mit dazwischen befindlicher Einlage möglich. Im Falle des Spiegelglases kann die Innenfläche des Außenelementes mit einer spiegelnden Beschichtung versehen werden. Bei einer Beschichtung mit einer Metallschicht kann diese gleichzeitig noch als elektrisch leitende Schicht und somit als elektrischer Anschluss für im Verbundelement integrierte elektrische Verbraucher dienen. Alternativ ist es möglich, dass ein Außenelement keine Glassscheibe ist, sondern aus wenigstens einem anderen Material besteht, beispielsweise aus Metall, insbesondere in Form einer Blechplatte, aus Stein usw..

Es ist möglich, vor der vakuumthermischen Behandlung im evakuierbaren Raum eine Vorbehandlung durchzuführen, in der Art, dass die beiden Außenelemente, die wenigstens eine Einlage und die wenigstens eine Schicht zu einem Vorverbund unter einem Vorpressdruck vorverpresst und dieser in den evakuierbaren Raum eingebracht wird. Vorzugsweise erfolgt die Vorverpressung im waagrechten Zustand der Außenelemente, wobei der Vorpressdruck beispielsweise durch Aufwalzen des oben liegenden Außenelementes aufgebracht werden kann. Es kann eine Vorbehandlungstemperatur eingestellt werden, so dass die Schicht anfängt zu fließen und einen Zusammenhalt der einzelnen Komponenten des Verbundelementes bewirkt, so dass der Vorverbund auch hochkant gestellt werden kann. Der dabei entstehende Vorverbund kann dann hochkant in den evakuierbaren Raum eingebracht werden, so dass mehrere Vorverbunde nebeneinander platziert werden können.

Die Erfindung betrifft ferner ein Verbundelement, das sich dadurch auszeichnet, dass zwei insbesondere plattenartige Außenelemente vorgesehen sind, von denen wenigstens eines eine Glasscheibe ist. Im wesentlichen zwischen den Außenelementen befindet sich wenigstens eine, insbesondere nicht vollflächig in bezug auf die Außenelemente ausgebildete Einlage und wenigstens eine lichtdurchlässige, thermisch beeinflussbare Schicht zur Verbindung von wenigstens einem Außenelement mit der Einlage. Vorzugsweise ist die lichtdurchlässige Schicht vakuumthermisch verformt und gaseinschlussfrei. Bei einer nicht vollflächigen Einlage können einlagenfreie Bereiche innerhalb des Verbundelementes vollständig und gasblasenfrei mit der Schicht gefüllt sein. Bei dem Verbundelement kann es sich um einen Spiegel handeln, der eine spiegelnde Beschichtung, insbesondere Metallbeschichtung, aufweist, wobei wenigstens eine Durchgangsöffnung zur Aufnahme wenigstens einer Einlage, insbesondere Diode, vorgesehen ist. Die Durchgangsöffnung kann sich als Sackloch im als Glasscheibe ausgebildeten Außenelement fortsetzen. Durch eine die Durchgangsöffnung im wesentlichen ausfüllende Füllschicht kann die Einlage in der Durchgangsöffnung befestigt werden. Die spiegelnde Beschichtung kann elektrisch leitend sein und somit als Stromführung für integrierte Einlagen in Form von elektrischen Verbrauchern, insbesondere Dioden, dienen.

Die Erfindung umfasst ferner eine Vorrichtung zur Durchführung des Verfahrens zur Herstellung von Verbundelementen. Eine Heizeinrichtung, insbesondere ein Ofen, ist auf eine Behandlungstemperatur einstellbar die geeignet ist, eine für ein herzustellendes Verbundelement benötigte, lichtdurchlässige, insbesondere transparente Schicht thermoplastisch zu machen. Die Heizeinrichtung ist mit einem evakuierbaren Raum zur Aufnahme einzelner Komponenten des herzustellenden Verbundelementes oder wenigstens eines vorverpressten Vorverbundes gekoppelt. Der evakuierbare Raum ist mit einer Unterdruckerzeugungseinrichtung zur Erzeugung eines Unterdrucks im Raum gekoppelt, wobei der Raum wenigstens ein durch den Unterdruck bewegbares, auf das Verbundelement unter einem Pressdruck pressbares Presselement aufweist.

Vorzugsweise ist als evakuierbarer Raum ein flexibler, wärmebeständiger Sack vorgesehen, wobei die Sackhülle das Presselement darstellt. Als Unterdruckerzeugungseinrichtung kann beispielsweise eine Vakuumpumpe verwendet werden.

Besonders bevorzugt ist es, einen Autoklaven zu verwenden, in dem die Heizeinrichtung integriert ist und der eine Überdruckerzeugungseinheit zur Erzeugung eines Überdrucks aufweist, der als Zusatz-Pressdruck auf das zu verpressende Verbundelement wirkt.

Bezüglich weiterer Details der erfindungsgemäßen Vorrichtung zur Herstellung von Verbundelementen wird ebenfalls auf die vorstehende Beschreibung und die nachfolgende Beschreibung bevorzugter Ausführungsbeispiele verwiesen.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im folgenden näher erläutert. Die Zeichnungen zeigen:
- Fig. 1: eine Schnittdarstellung eines ersten Ausführungsbeispieles einer erfindungsgemäßen Vorrichtung zur Herstellung von Verbundelementen,
- Fig. 2: eine Vorderansicht auf die Vorrichtung gemäß Fig. 1,
- Fig. 3: Verfahrensschritte 3a bis 3c bei der Herstellung eines Vorverbundes gemäß dem erfindungsgemäßen Verfahren,
- Fig. 4: Verfahrensschritte 4a bis 4c bei der vakuumthermischen Behandlung für die Herstellung eines Verbundelementes gemäß dem erfindungsgemäßen Verfahren,
- Fig. 5: eine Darstellung eines zweiten Ausführungsbeispieles eines erfindungsgemäßen Verbundelementes,
- Fig. 6: eine perspektivische Darstellung eines dritten Ausführungsbeispiels des Verbundelementes,
- Fig. 7: eine Darstellung eines vierten Ausführungsbeispiels des Verbundelementes,
- Fig.8: eine, perspektivische Darstellung eines fünften Ausführungsbeispiels des Verbundelementes,
- Fig. 9: eine Darstellung eines sechsten Ausführungsbeispiels des Verbundelementes,
- Fig. 10: eine Kantenansicht des Verbundelementes von Fig. 9,
- Fig. 11: eine Darstellung eines siebten Ausführungsbeispiels des Verbundelementes und
- Fig. 12: eine Darstellung eines achten Ausführungsbeispiels des Verbundelementes und

- Fig. 13: eine perspektivische Ansicht eines Verbundelementes in Explosionsdarstellung

### Detaillierte Beschreibung der Ausführungsbeispiele

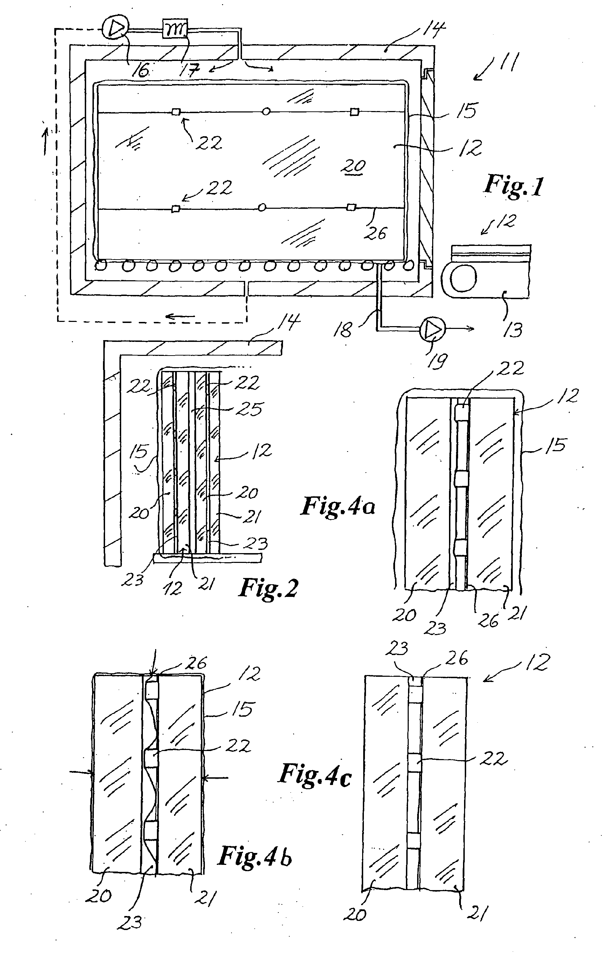

Fig. 1 zeigt schematisch ein erstes Ausführungsbeispiel einer erfindungsgemäßen Vorrichtung 11 zur Herstellung von Verbundelementen 12. Die Vorrichtung 11 umfasst ein Förderband 13 mit dem vorverpresste Vorverbunde antransportiert werden, einen Autoklaven 14 zur thermischen Überdruckbehandlung der herzustellenden Verbundelemente 12 und einen evakuierbaren Raum in Form eines flexiblen Sacks 15 zur Aufnahme und vakuumthermischen Behandlung der Verbundelemente 12, wobei der flexible Sack 15 mitsamt den Verbundelementen 12 in den Autoklaven 14 einbringbar ist.

Es sind gängige Autoklaven 14 einsetzbar, die im wesentlichen aus einer druck- und temperaturbeständigen Kammer bestehen, die derart bemessen ist, dass mehrere Verbundelemente 12 hochkant eingebracht werden können. Die senkrechte bzw. hochkantige Platzierung der Verbundelemente im Autoklav hat gegenüber einer waagrechten Platzierung den Vorteil, dass deren Eigengewicht beim Herstellungsprozess im wesentlich keinen Einfluss besitzt. Bei der waagrechten Platzierung kann es vorkommen, dass untenliegende Verbundelemente 12 durch das Gewicht von darüber liegenden Verbundelementen 12 stärker verpresst werden, so dass eine gleichbleibende Herstellungsqualität nicht gewährleistet ist. Der Autoklav 14 besitzt eine Druckluftpumpe 16 zur Erzeugung von Druckluft und eine Heizeinrichtung 17 zur Erwärmung der Druckluft und zur Einstellung einer Behandlungstemperatur. Die Behandlungstemperatur liegt dabei im Bereich von 100°C bis 150°C, beispielsweise bei 130°C. Es strömt also heiße Luft unter Überdruck ein, wobei der Überdruck als Zusatz-Pressdruck auf ein oder mehrere im Autoklaven 14 befindliche Verbundelemente 12 wirkt. Es ist eine Umluftführung vorgesehen, so dass die Luft im Autoklaven 14 stetig umgewälzt wird und somit immer wieder neu verdichtet und neu erhitzt wird.

Der flexible Sack 15 ist derart bemessen, dass er ein oder mehrere, gegebenenfalls durch Zwischenelemente 25 getrennte Verbundelemente 12 aufnehmen kann. Nach deren Aufnahme kann er luftdicht verschlossen werden. Der flexible Sack 15 kann beispielsweise aus einem wärmebeständigen Kunststoffmaterial hergestellt sein. Am Sack 15 befindet sich eine Luftleitung 18 mit einem Absperrventil, wobei die Luftleitung 18 mit einer Vakuumpumpe 19 verbunden ist, die zur Evakuierung des Sacks 15, also zu Erzeugung eines Unterdrucks eingesetzt wird. Durch die Evakuierung des Sacks 15 schmiegt sich dessen Hülle an das herzustellende Verbundelement 12 an und presst dieses mit einem Pressdruck zusammen. Der Gesamt-Pressdruck, der auf das herzustellende Verbundelement 12 wirkt, setzt sich also zusammen aus dem Pressdruck, der durch das unterdruckbedingte Anschmiegen des Sackes entsteht, und dem Zusatz-Pressdruck, der durch die Druckluft im Autoklaven gegeben ist. Dieser Gesamt-Pressdruck liegt im Bereich von 12 bar bis 18 bar, beispielsweise bei 15 bar.

Die hierzu betrachteten Verbundelemente 12 bestehen vorzugsweise aus zwei plattenartigen Außenelementen 20, 21, die hier beispielhaft anhand von Glasscheiben dargestellt sind. Im wesentlichen zwischen den beiden Glasscheiben befindet sich wenigstens eine Einlage 22, die hier beispielhaft anhand von Dioden (Figuren 1, 2, 3 und 4) und einer verbundfestigkeitsverstärkenden Einlage aus Verstärkungsmaterial (Figuren 2, 5 und 6), beispielsweise aus lichtdurchlässigem Kunststoff in Form von Acrylglas, dargestellt sind. Ebenfalls zwischen den beiden Glasscheiben befindet sich eine lichtdurchlässige, thermisch beeinflussbare Schicht 23 zur Verbindung der Außenelemente 20, 21 mit der Einlage 22, also der Glasscheiben mit den Dioden, die hier beispielhaft in Form einer thermoplastischen Folie dargestellt ist. Als thermoplastische Folie wird bevorzugt eine reißfeste Polyvinylbutyral-Folie verwendet.

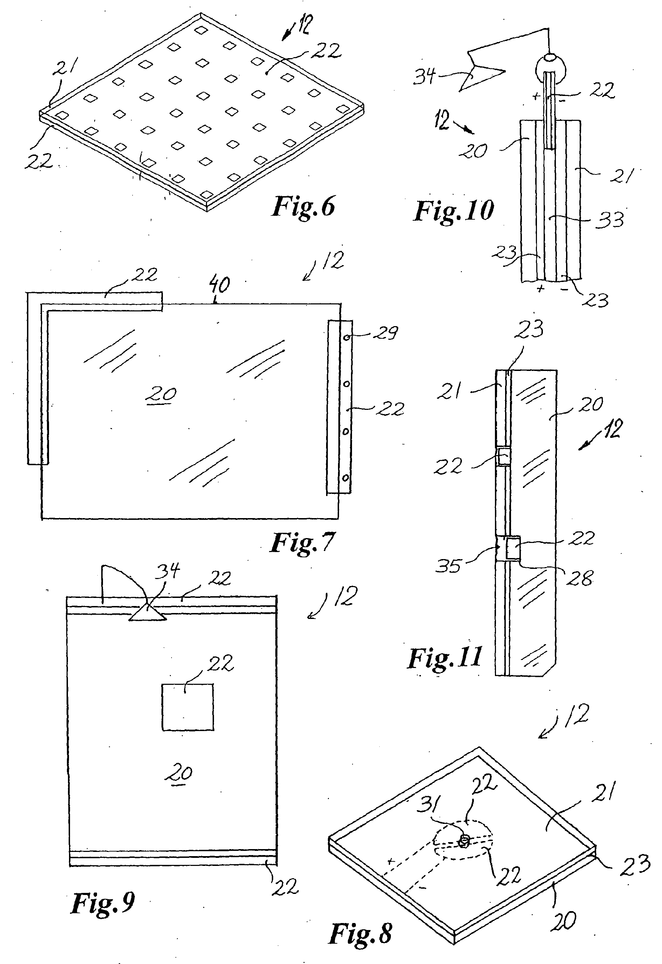

Eine Alternative stellt das in Fig. 11 gezeigte Ausführungsbeispiel eines Verbundelementes dar. Das Verbundelement stellt einen Spiegel dar, der eine spiegelnde Beschichtung aufweist. Die Einlagen sind wiederum beispielhaft in Form von Dioden dargestellt, die auf einer ebenen Innenfläche oder in einem Sackloch 28 der Glasscheibe befestigt sind.

### Verfahren

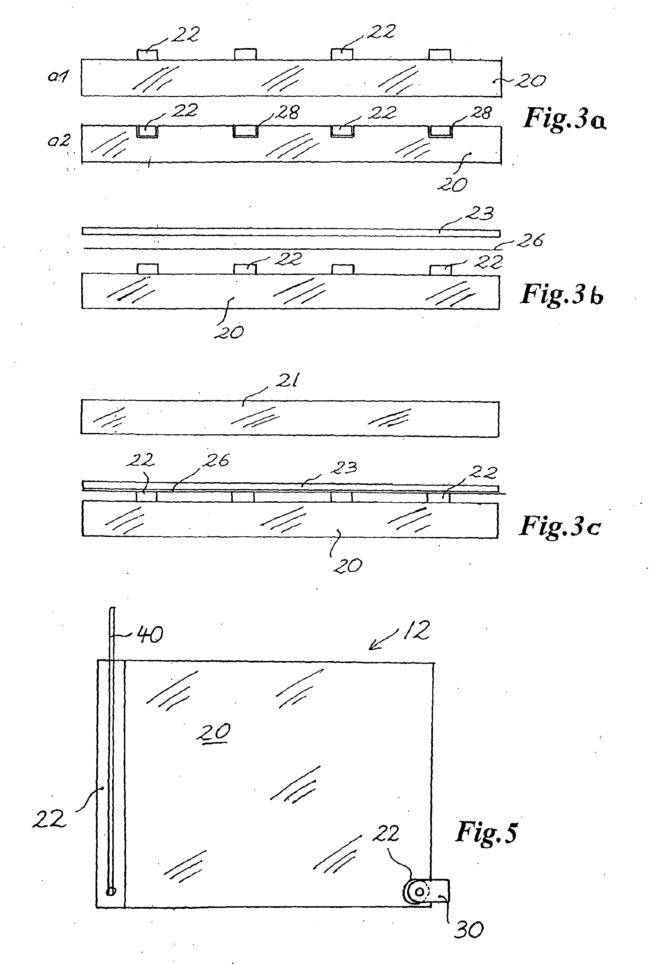

In Fig. 3 ist beispielhaft anhand von aufeinanderfolgenden Verfahrensschritten 3a bis 3c die Herstellung eines Vorverbundes gezeigt. Die Herstellung des Vorverbundes erfolgt im waagrechten Zustand, wobei zunächst ein, beispielsweise als Glasscheibe ausgebildetes, erstes Außenelement 20 auf eine Unterlage gelegt wird. Wie in Fig. 3a1 dargestellt kann es sich dabei um eine Glasscheibe mit glatter Innenfläche oder, wie in Fig. 3a2 dargestellt, um eine Glasscheibe mit Sacklöchern 28 an deren Innenfläche handeln. Die Sacklöcher 28 dienen dazu Einlagen 22, die hier beispielhaft in Form von Dioden dargestellt sind, im wesentlichen vollständig aufzunehmen.

Die Dioden werden, wie in Fig. 3a1 dargestellt auf der Innenfläche der Glasscheibe an vorbestimmten Positionen mittels eines Fixiermittels fixiert. Bei der in Fig. 3a2 dargestellten Alternative sind die Positionen der Dioden bereits durch die Lage der Sacklöcher 28 vorbestimmt, worin die Dioden mittels eines Fixiermittels befestigt werden. Durch das Einbringen des Fixiermittels, beispielsweise einem Klebstoff, werden die matten Sacklöcher lichtdurchlässiger.

Als nächstes wird, wie in Figur 3b darstellt, die Stromführung der Dioden, die hier beispielhaft anhand eines vorzugsweise relativ dünnen Drahtes dargestellt ist, an den Dioden befestigt vorzugsweise mit diesen verlötet. Das zwischen den beiden Lötpunkten einer Diode befindliche Drahtstück wird dann herausgeschnitten.
Als nächstes wird eine lichtdurchlässige, thermisch beeinflussbare Schicht 23 in Form der thermoplastischen Folie auf die Dioden gelegt.

Alternativ ist es möglich zunächst die Folie aufzulegen und dann die Dioden in Form einer bereits zuvor verlöteten Diodenreihe aufzusetzen.

Als letzter Verfahrensschritt bei der Herstellung des Vorverbundes wird, wie in Fig. 3c dargestellt das zweite Außenelement 21, das hier ebenfalls beispielhaft anhand einer Glasscheibe gezeigt ist, auf das zuvor hergestellte "Sandwich" aus Glasscheibe, Einlage 22 und Schicht 23 aufgelegt und mit einem Vorpressdruck angepresst, wobei dieser Vorpressdruck manuell oder durch eine geeignete Walz- oder Streichapparatur aufgebracht werden kann.

Der Vorverbund wird dann mittels des Förderbandes 13 zum Autoklaven 14 hin befördert, und hochkant gegebenenfalls zusammen mit anderen Verbundelementen 12 zunächst in den flexiblen Sack 15 gestellt, der sich beispielsweise bereits schon im Autoklaven 14 befinden kann. Nach dem Einbringen des wenigstens einen Verbundelementes 12 wird der Sack 15 luftdicht verschlossen, beispielsweise luftdicht verschweißt.

Wie in Fig. 4 dargestellt, befindet sich das Verbundelement 12 im luftdicht verschweißten, flexiblen Sack 15, wobei die Sackhülle, wie in Fig. 4a dargestellt, noch lose auf dem Verbundelement 12 aufliegt. Als nächstes wird durch Betätigen der Vakuumpumpe 19 Luft aus dem Sack 15 gepumpt, so dass im Sack ein Unterdruck entsteht und sich die Sackhülle fest, unter einem Pressdruck an das Verbundelement 12 anpresst (Fig. 4b). Durch Schließen des Absperrventils kann dieser Unterdruck-Zustand über die gewünschte Behandlungsdauer aufrechterhalten werden. Im wesentlichen gleichzeitig mit der Herstellung des Unterdrucks im Sack wird der Autoklav 14 in Betrieb gesetzt, so dass heiße Druckluft in die Autoklavenkammer strömt. Der mittels der Druckluft erzeugte Überdruck wirkt nun zusätzlich zu dem Vakuum-Pressdruck des Sacks 15 auf das zu verpressende Verbundelement 12. Die auf Behandlungstemperatur gebrachte heiße Luft bewirkt, dass die thermoplastisch Folie anfängt zu fließen, so dass wie in Fig. 4b dargestellt, die Zwischenräume zwischen den einzelnen Dioden mit der Schicht 23 gefüllt werden, bis sie wie in Fig. 4c dargestellt, vollständig mit Schicht 23 gefüllt sind. Falls beim Vorverpressen des Vorverbundes bereits ein Vorpressdruck bzw. eine Vorbehandlungstemperatur eingestellt wurde, der bzw. die ausreichend war, um die thermoplastische Folie zum Fließen zu bringen, werden nun die beim Vorverpressen entstandenen Gaseinschlüsse, insbesondere Luftblasen, durch die vakuumthermische Behandlung im Autoklaven 14 vollständig entfernt und vollständig mit Schicht gefüllt.

Es ist auch möglich, statt der Erzeugung eines Unterdrucks nur mit dem Überdruck außerhalb des evakuierbaren Raums, also mit relativem Unterdruck zu arbeiten, wobei der Sack lediglich zu entlüften wäre.

Durch das erfindungsgemäße Verfahren entstehen Verbundelemente, die sich dadurch auszeichnen, dass keine Luftblasen oder sonstige Unregelmäßigkeiten zu sehen sind und die Einlagen 22 besitzen, die sauber zwischen den beiden Außenelementen 20, 21 eingebettet sind. Solche erfindungsgemäßen Verbundelemente 12 lassen sich als hochwertige Design-Elemente einsetzen und erfüllen aufgrund ihrer Gaseinschlussfreiheit auch Sicherheitsvorschriften, die für absturzsichernde Verglasung gelten.

In Fig. 5 ist ein Verbundelement 12 dargestellt, das statt einer Einlage 22 aus Dioden eine Einlage 22 aus verbundfestigkeitsverstärkendem Material hat, das hier beispielhaft dargestellt an den Randbereichen des Verbundelementes 12 als relativ schmaler Materialstreifen oder, wie in Fig. 5 rechts unten dargestellt, als relativ kleine Einlagenscheibe eingefügt ist. Als verbundfestigkeitsverstärkendes Material kann beispielsweise lichtdurchlässiger Kunststoff in Form von Acrylglas verwendet werden. Das in Fig. 5 dargestellte Verbundelement 12 kann beispielsweise als absturzsichernde Verglasung für Brüstungen usw. verwendet werden, da die eingefügten verbundfestigkeitsverstärkenden Materialien die Festigkeit des Verbundelementes 12 derart erhöhen, dass es den einschlägigen Sicherheitsanforderungen für absturzsichernde Verglasung genügt. In die Einlagenscheiben können Bohrungen eingebracht werden, an denen Befestigungselemente, beispielsweise Glaspunkthalter 30 befestigt werden können. Der Vorteil dabei ist, dass diese Bohrungen an Abschnitten des Verbundelementes 12 liegen können, die bei reinen Glas-Verbundelementen ohne Einlage nicht zulässig wären, da dort ein Mindestabstand von ca. 8cm von den Rändern eingehalten werden muss.

Ein weiteres Anwendungsgebiet solcher Verbundelemente sind Vordächer. Je nach Lage des verbundfestigkeitsverstärkenden Materials im Verbundelement können dort Bohrungen angebracht werden, und zum Befestigen von Aufhängelementen des Vordachs, beispielsweise von Spannseilen 40 usw. verwendet werden.

In Figur 6 ist ein Verbundelement 12 dargestellt, das als Einlage 22 ein Lochblech verwendet. Solche Lochblech-Verbundelemente können dekorativ eingesetzt werden und haben hohe sicherheitsrelevante Merkmale. Beispielsweise lassen sich solche Lochblech-Verbundelemente in Glastüren dekorativ und einbruchshemmend einsetzen.

Fig. 7 zeigt ein Verbundelement 12, das als Einlage 22 ist ein Verstärkungsmaterial verwendet, das aus dem Verbundelement 12 herausragt und ggf. über Eck geführt ist. Es kann Verstärkungsmaterial verwendet werden, dass sich im wesentlichen über eine Seite des Verbundelementes 12 erstreckt oder Verstärkungsmaterial in Form kleiner Teile, wie Scheiben, Klammern o. dgl.. An den herausragenden Abschnitten der Einlage 22 können Bohrungen 29 vorgesehen sein, um daran wenigstens ein zusätzliches Element, wie ein Befestigungselement, beispielsweise in Form eines Spannseiles 40 o. dgl. zu befestigen. Es ist auch möglich, an den über den Rand 40 des Verbundelementes herausragenden Abschnitten weitere, insbesondere gleichartige Verbundelemente 12 zu befestigen. Dies ist beispielsweise bei Vordächern interessant, die aus mehreren Verbundelementen 12 aufgebaut sind. Alternativ kann auch wenigstens ein, vorzugsweise relativ kleines, beispielsweise kreisscheibenförmiges Element (nicht dargestellt) im Bereich des Zentrums des Verbundelementes integriert werden, wobei eine Glasscheibe des Verbundelementes eine Aussparung aufweisen kann um dort ein Zusatzelement an die Einlage 22 anbinden zu können. Eine weitere Möglichkeit ist, das Verbundelement als Treppenstufe zu verwenden, wobei die Stufe an den herausragenden Abschnitten an der Treppe befestigt werden kann.

In Fig. 8 ist ein Verbundelement 12 dargestellt, das als Überkopfverglasung einsetzbar ist. Dort ist als Einlage 22 ein Verstärkungsmaterial verwendet worden, das hier beispielhaft in Form zweier Halb-Scheiben dargestellt ist. Es ist bei Überkopfverglasungen nicht gestattet vorgespannte Gläser in der Zugzone zu bohren ohne die Gläser gleichzeitig dort zu befestigen. Durch die verstärkende Einlage 22 ist jedoch das Verbundelement 12 zumindest im Bereich der Einlage 22 gestärkt, so dass dort auch wenigstens eine Bohrung 31 vorgesehen werden kann, die nicht nur für die Aufnahme von Befestigungselementen bestimmt ist, sondern beispielsweise zur Aufnahme von elektrischen Verbrauchern eingesetzt werden kann. Die scheibenförmige Einlage 22 kann dabei gleichzeitig als Stromzuführung für den Verbraucher dienen, beispielsweise kann eine Halb-Scheibe als Plus- und die andere Halb-Scheibe als Minuspol verwendet werden.

Die Fig. 9 und 10 zeigen ein Verbundelement 12, das als Einlage 22 ein aus dem Verbundelement 12 herausragendes Befestigungselement verwendet, das zwischen zwei elektrisch leitenden Schichten eingebettet ist. Bei den elektrisch leitenden Schichten kann es sich um jeweils eine lichtdurchlässige, insbesondere transparente, thermisch beeinflussbare Schicht 23 in Form einer elektrisch leitenden, thermoplastischen Folie handeln. Die beiden elektrisch leitenden Schichten 23 können durch eine nicht leitende Zwischenschicht 33 voneinander getrennt sein. Das Befestigungselement besitzt seinerseits zwei elektrisch leitende Außenflächen, die jeweils als Plus- und Minuspol mit der korrespondierenden elektrisch leitenden Schicht 23 gekoppelt sind und an denen ein elektrischer Verbraucher, der hier beispielhaft anhand einer Lampe 34 dargestellt ist, befestigt ist. Die elektrisch leitenden Schichten 23 wiederum sind mit einer Stromquelle verbunden, die ebenfalls als Einlage 22 in das Verbundelement integriert ist. Als Stromquelle kann eine Solarzelle eingesetzt werden.

Fig. 11 zeigt ein Verbundelement 12, das als Spiegel mit spiegelnder Beschichtung 21 ausgebildet ist. Zur Herstellung wird zunächst auf die als Außenelement 20 ausgebildete Glasscheibe eine spiegelnde Beschichtung aufgebracht, beispielsweise aufgedampft. Als nächstes werden in die spiegelnde Beschichtung Durchgangsöffnungen 35 eingebracht, beispielsweise mittels Bohren, Sandstrahlen oder dergleichen. Die Durchgangsöffnung kann als Sackloch 28 in die Glasscheibe hinein erweitert werden. Alternativ ist es möglich, das Sackloch bereits vor dem Aufbringen der spiegelnden Beschichtung 21 vorzusehen. In die Durchgangsöffnung 35 wird dann eine Einlage 22 in Form einer Diode eingelegt und mittels einer Füllschicht, die die Durchgangsöffnung im wesentlichen auffüllt, befestigt. Die Diode wird über die leitende Schicht 23 versorgt, was aber auch durch die Öffnung 35 erfolgen kann. Im Fall des Sackloches könnte die Spiegelschicht 21 auch später durchgehend aufgebracht werden. Dadurch, dass das Leuchtmittel, vorzugsweise die Diode, im Sackloch 28 sitzt, wird das Licht auch innerhalb der Glasscheibe transportiert und erhellt matte, vorzugsweise sandgestrahlte Flächen (Randstreifen, die als Facetten leuchten) oder Ornamente, die auf der Innen- oder vorzugsweise Außenfläche des Außenelementes 20 vertieft sind.

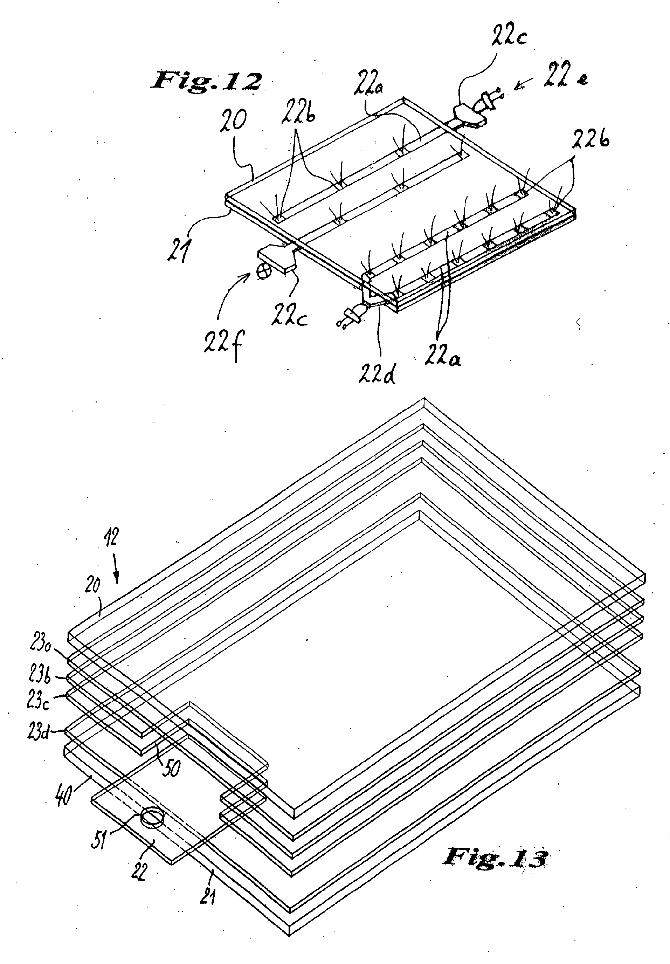

Fig. 12 zeigt ein Verbundelement 12 mit einem integrierten Lichtleiter. Es ist eine Abwandlung des Ausführungsbeispiels aus Fig. 6. Zwischen den Glasscheiben 20, 21 sind Lichtleiter 22a in verschiedenen Formen eingebracht. Ganz links ist der Lichtleiter 22a gerade und reicht aus dem Verbundelement 12 heraus. Außen ist eine LED 22e an einer Einkoppelstelle 22c vorgesehen. Hier wird Licht von der LED 22e in den Lichtleiter 22a eingekoppelt. An den Abstrahlflächen 22b wird das Licht ausgekoppelt, wie in der Zeichnung angedeutet ist. Dazu können die Abstrahlflächen 22b als winklige Einschnitte odgl. in den Lichtleiter ausgebildet sein, oder auch durch Materialeinschlüsse odgl.

Anstelle einer externen LED kann auch eine externe Glühlampe 22f vorgesehen sein. Alternativ zu der externen Anordnung der Lichtquellen könne diese auch zwischen den Glasscheiben 20, 21 integriert sein. Dann sind sie aber kaum mehr auswechselbar.

Ganz rechts ist eine weitere Ausbildung eines Lichtleiters dargestellt. Er gabelt sich hinter der Einkoppelstelle 22c in zwei Äste 22a auf, welche parallel verlaufen. Sie können aber auch beliebig verlaufen, beispielsweise gekrümmt. Hier reicht eine einzige Lichtquelle für eine Vielzahl von Abstrahlflächen 22b bzw. Lichtpunkten an dem Verbundelement 12. Die Abstrahlflächen können in wechselnde oder beliebige Richtungen strahlen, beispielsweise auch in Längsrichtung des Verbundelements.

Figur 13 zeigt ein Verbundelement 12 mit einer Einlage 22 in Explosionsdarstellung, z. B. vor dem Verbund. Zwischen zwei Glasscheiben 20 21 wird die Einlage 22 in Form einer plattenförmigen Blech-Befestigungslasche eingebunden. Dazu werden insgesamt vier Folienlagen 23 a - d als thermoplastische Schicht 23 zwischen die Scheiben eingebracht. Die den Scheiben benachbarten Lagen 23a und 23d sind über die gesamte Scheibenfläche durchgehend, während die mittleren Lagen 23b und 23c Ausschnitte 50 haben, die in Größe und Form dem Teil der Einlage entsprechen, der zwischen die Scheiben eingreift

Die Dicke der Folien ist zur Veranschaulichung überhöht dargestellt. Die beiden mittleren Lagen 23b, c sollten zusammen etwa so dick sein wie die Einlage. Sie umschließen die Einlage 22 bei Erwärmung unter Druck. Die Einlage könnte auch nicht dargestellte Ausnehmungen haben, in die das Folienmaterial bei der verschmelzenden Verbindung hineinfließt. Die Lagen 23a, d stellen die flächige verklebende Verbindung zwischen Einlage 22 und den Scheiben 20, 21 her. Die z. B. mit einem Befestigungsloch 51 versehene Einlage kann mehrfach am Rand 40 des Verbundelements angebracht sein und ermöglicht eine sichere, durchbruchsfreie Montage des Elementes.

Versuche haben gezeigt, dass diese Art der Halterung von Glasbauelementen allen anderen kraft- oder formschlüssigen Montagearten hoch überlegen ist. Dazu trägt es bei, dass die Verbindung Metall/Glas sehr großflächig ist, dass keine unmittelbare Berührung Metall/Glas vorliegt, die Kunststofffolie stoßdämpfend und kraftausgleichendwirkt und durch die sehr dünne Folienschicht eine hervorragende Bindung zwischen der Einlage und dem Glas entsteht.

## Patentansprüche

1. Verfahren zur Herstellung von Verbundelementen (12), mit zwei plattenartigen Außenelemente (20, 21) von denen wenigstens eines eine Glasscheibe ist, wenigstens einer im wesentlichen zwischen den Außenelementen (20, 21) befindlichen Einlage (22), die in Bezug auf die Außenelemente nicht vollflächig ist und mit wenigstens zwei thermisch beeinflussbaren Folienschichten (23) zur Verbindung der Außenelemente (20, 21) mit der Einlage (22), das Verfahren mit folgenden Schritten:
- Einbringen der Einlage (22) und der Folienschichten (23) zwischen die Außenelemente (20, 21),
- Einbringen des Verbundelementes (12) in einen evakuierbaren Raum, insbesondere in einen flexiblen Sack (15),
- Anlegen eines relativen Unterdrucks an den Raum, wobei wenigstens ein Teil des Raumes unter einem von diesem relativen Unterdruck bedingten Pressdruck auf das Verbundelement (12) gepresst wird und dieses zusammenpresst sowie gleichzeitiges
- Einstellen einer Behandlungstemperatur derart, dass in Kombination mit dem Pressdruck die Folienschichten (23) die Einlage (22) unter Vermeidung der Bildung von Gaseinschlüssen umfließen,
- **dadurch gekennzeichnet, dass** die Einlage (22) eine Stromzuführung für einen elektrischen Verbraucher ist, der an dem Verbundelement (12) oder zwischen den Außenelementen (20, 21) angeordnet ist.

2. Verfahren nach Anspruch 1, **dadurch gekennzeichnet, dass** zwischen Einlage (22) und Außenelementen (20, 21) je eine thermoplastische Folienschicht (23) eingelegt wird.

3. Verfahren nach einem der Ansprüche 1 oder 2, **dadurch gekennzeichnet, dass** eine in Richtung wenigstens eines Randes des Verbundelementes (12) wirkende Streich - oder Walzbewegung das Entfernen der Gaseinschlüsse unterstützt und/oder wenigstens ein Randbereich des Verbundelementes (12) entlastet wird, um ein Entweichen der Gaseinschlüsse zu erleichtern.

4. Verfahren nach einem der vorhergehenden Ansprüche, **dadurch gekennzeichnet, dass** das Verbundelement (12) allseitig, zumindest aber im Bereich seiner beiden Außenflächen, zusammengepresst wird, insbesondere mittels eines als flexibler Sack (15) ausgebildeten Raums, der wenigstens ein Verbundelement (12) vollständig umschließt.

5. Verfahren nach einem der vorhergehenden Ansprüche, **dadurch gekennzeichnet, dass** zum Verpressen des Verbundelementes (12) ein ggf. zusätzlicher, vom Unterdruck im Raum unabhängiger Zusatz-Pressdruck aufgebracht wird, der mittels einer Überdruckerzeugungseinrichtung, insbesondere um einen mittels eines Autoklaven, erzeugt wird.

6. Verfahren nach einem der vorhergehenden Ansprüche, dass ein Pressdruck im Bereich von 5bar bis 25bar, insbesondere im Bereich von 12bar bis 18bar und/oder eine Behandlungstemperatur im Bereich von 50°C bis 200°C, insbesondere im Bereich von 100°C bis 150°C, gewählt wird.

7. Verfahren nach einem der vorhergehenden Ansprüche, **dadurch gekennzeichnet, dass** es sich bei der Schicht (23) um eine insbesondere thermoplastische Folie handelt, die vorzugsweise farblos und/oder reißfest ist.

8. Verfahren nach einem der vorhergehenden Ansprüche, **dadurch gekennzeichnet dass** eine Vorbehandlung durchgeführt wird derart, dass die beiden Außenelemente (20, 21), die wenigstens eine Einlage (22) und die wenigstens eine Schicht (23) zu einem Vorverbund unter einem Vorpressdruck vorverpresst und dieser in den evakuierbaren Raum eingebracht wird, wobei vorzugsweise im liegenden, waagrechten Zustand der Außenelemente (20, 21) vorverpresst und der entstehende Vorverbund hochkant in den Raum eingebracht wird.

9. Verfahren nach einem der vorhergehenden Ansrüche, **dadurch gekennzeichnet, dass** zur Verbindung der Außenelemente (20, 21) mehrere Schichten (23) eingelegt werden, von denen wenigstens eine entsprechend der Gestalt der Einlage (22) ausgeschnitten ist, wobei jedoch vorzugsweise je eine Schicht (23) zwischen Einlage und den Außenelementen verläuft.

10. Verbundelement mit zwei plattenartigen Außenelementen (20, 21) von den wenigstens eines eine Glasscheibe ist, wenigstens einer im wesentlichen zwischen den Außenelementen (20, 21) befindlichen Einlage (22) und wenigstens zwei thermoplastischen Folienschichten (23), die mittels vakuumthermischer Verformung sowohl die Einlage umschließen als auch an die Außenelemente gebunden sind und die Außenelemente (20, 21) miteinander und mit der Einlage (22) verbinden, die nicht vollflächig in bezug auf die Au-ßenelemente (20, 21) ausgebildet ist und einlagenfreie Bereiche aufweist, die innerhalb des Verbundelementes (12) vollständig und gaseinschlussfrei mit dem Material der Schicht (23) gefüllt sind, **dadurch gekennzeichnet, dass** die Einlage (22) eine Stromzuführung für einen elektrischen Verbraucher ist, der an dem Verbundelement (12) oder zwischen den Außenelementen (20, 21) angeordnet ist.

11. Verbundelement nach Anspruch 10, **dadurch gekennzeichnet, dass** es ein Spiegel mit einer spiegelnden Beschichtung, insbesondere Metallbeschichtung, ist, der wenigstens eine Durchgangsöffnung (35) zur Aufnahme wenigstens einer Einlage (22) aufweist, wobei sich insbesondere die Durchgangsöffnung als Sackloch (28) im als Glasscheibe ausgebildeten Außenelement (20) fortsetzt und in ihr die Einlage, wie eine LED-Diode, mittels einer die Durchgangsöffnung im wesentlichen ausfüllenden Füllschicht festgelegt ist.

12. Verbundelement hergestellt nach einem Verfahren nach einem der Ansprüche 1 bis 9.

13. Vorrichtung zur Durchführung des Verfahrens nach einem der Ansprüche 1 bis 9 oder zur Herstellung von Verbundelementen nach einem der Ansprüche 10 bis 12, mit einer Heizeinrichtung (17), insbesondere einem Ofen, zur Einstellung einer Behandlungstemperatur, die geeignet ist eine für ein herzustellendes Verbundelement (12) benötigte, lichtdurchlässige, insbesondere transparente Schicht (23) thermisch zu beeinflussen und einem mit der Heizeinrichtung (17) gekoppelten evakuierbaren Raum (15) zur Aufnahme einzelner Komponenten des herzustellenden Verbundelementes (12) oder wenigstens eines vorverpressten Verbundelementes und einer mit dem Raum (15) gekoppelten Unterdruckerzeugungseinrichtung (19) zur Erzeugung eines relativen Unterdrucks im Raum, wobei der Raum wenigstens ein unter einem relativen Unterdruck bedingten Pressdruck auf das Verbundelement (12) preßbares Presselement aufweist.

14. Vorrichtung nach Anspruch 13, **dadurch gekennzeichnet, dass** als evakuierbarer Raum ein flexibler, insbesondere wärmebeständiger Sack (15) vorgesehen ist.

15. Vorrichtung nach Anspruch 13 oder 14, **dadurch gekennzeichnet, dass** als Unterdruckerzeugungseinrichtung eine Vakuumpumpe (19) vorgesehen ist.

16. Vorrichtung nach einem der Ansprüche 13 bis 15, **gekennzeichnet durch** einen Autoklaven (14), in dem die Heizeinrichtung (17) integriert ist und der eine Überdruckerzeugungseinheit (16) zur Erzeugung eines Überdrucks aufweist, der als Zusatz-Pressdruck auf ein herzustellendes Verbundelement (12) wirkt.
